# EUROPEAN PATENT SPECIFICATION

(11) **EP 0 317 672 B1**
(45) Date of publication and mention of the grant of the patent: **07.04.1993**
(21) Application number: 87310159.6
(22) Date of filing: 18.11.1987
(51) Int. Cl.: B26D 7/26

(54) **Rotary cutting cylinder**
Rotierender Schneidzylinder
Cylindre de coupe rotative

(43) Date of publication of application: 31.05.1989
(73) Proprietor: Rosemann, Thomas J., Manchester Missouri 63021 (US)
(72) Inventor: Rosemann, Thomas J., Manchester Missouri 63021 (US)
(74) Representative: Lyons, Andrew John

(56) References cited:
- CH-A- 662 304
- US-A- 4 671 154
- US-A- 4 715 250

## Description

This invention relates to rotary cutting cylinders.

In US-A-4671154 there is generally disclosed a rotary cutting cylinder comprising a generally cylindrical central section, the central section having at least one longitudinal slot having opposing sidewalls, a cutting rule in the slot, the cutting rule having a cutting edge protruding from the slot, a mounting bar in the slot adjacent the cutting rule, and means for urging the cutting rule against the sidewall of the slot and for urging the mounting bar away from the cutting rule and against the opposite sidewall of the slot to secure the cutting rule in the slot.

More particularly, the urging means comprise a plurality of metallic bellows cylinders which are expanded by being internally pressurized by pressure medium fed to the cylinders from a pressure medium generating assembly, expansion of the bellows cylinders urging the cutting rule and the mounting bar as aforesaid.

In accordance with the present invention as claimed, the aforesaid generally disclosed rotary cutting cylinder is characterised in that the urging means comprise a plurality of manually operable urging means each located in the mounting bar and longitudinally spaced therealong, and in that the central section includes a plurality of longitudinally spaced grooves each having a portion generally tangential to the central section and aligned with the respective manually operable urging means to provide manual access thereto to enable each such urging means to be manually operated to urge the cutting rule against said one sidewall of the slot and urge the mounting bar away from the cutting rule and against the opposite sidewall of the slot.

Preferably, each manually operable urging means takes the form of a set screw threaded into the mounting bar.

A past method of manufacturing a rotary cutting cylinder includes the step of forming a cylinder, such as on a lathe. A longitudinal slot is then made in the cylinder to receive a cutting rule. Several tangential notches are then milled into the cylinder, adjacent the slot. The notches are spaced along the length of the slot. The notches are carefully milled so that the bases of the notches form flat faces parallel to the walls of the slot. A threaded hole is made through the face at the base of each notch, into the slot. Set screws are then threaded into the holes, into the slot, to engage the cutting rule and secure the rule in the slot.

Several different forming steps are required to make a rotary cutting cylinder according to this prior method. Thus, the prior method is both time consuming and expensive, and requires expensive equipment and skilled labour. The resulting rotary cutting cylinders have thus been expensive.

The construction of the preferred rotary cutting cylinder in accordance with the invention lends itself to manufacture by a simplified method as compared with the discussed prior method that reduces the number of forming steps, shortens the manufacturing time, and requires less equipment and less labour.

In the method of manufacturing the preferred cutting cylinder, a cylinder is formed, such as on a lathe. During this forming step, a number of longitudinally spaced grooves are formed in the cylinder. These grooves preferably extend circumferentially around the cylinder so that they can be formed with the lathe. However, partial grooves, tangential cuts, or notches can be made instead. Then, a longitudinal slot is formed in the cylinder, crossing the grooves. This slot is wide enough to receive a cutting rule, a stiffening shim (if required), and a mounting bar. The mounting bar is a rectangular cross-section bar with set screws spaced at regular intervals. This mounting bar is a stock item that can be trimmed to fit the slot. The grooves in the cylinder are spaced complementary to the set screws so that a tool can be inserted in the groove to tighten and loosen the set screws. When the set screws are tightened, they push the cutting rule and mounting bar against the opposite walls of the slot, frictionally engaging the cutting rule and mounting bar in the slot.

The preferred rotary cutting cylinder of the invention is thus formed in two steps, eliminating the step of milling notches and the step of forming threaded holes for set screws, needed in the discussed prior art method. This reduces the amount of labour required to form the cylinder. The resulting rotary cutting cylinder is of simple and reliable construction.

In order that the invention may be well understood there will now be described some embodiments thereof, given by way of example, reference being made to the accompanying drawings, in which:
FIGURE 1 is a side elevation view of a first rotary cutting cylinder embodying the invention, showing a cutting rule mounted therein;
FIGURE 2 is a cross-sectional view of the end of the same rotary cutting cylinder taken along the plane of line 2-2 in Figure 1;
FIGURE 3 is a partial sectional view of the same rotary cutting cylinder, through one of the grooves in the cylinder;
FIGURE 4 is a cross-sectional view of the same rotary cutting cylinder, through one of the grooves, taken along the plane of line 4-4 in Figure 1;
FIGURE 5 is a partial cross-sectional view of the same rotary cutting cylinder taken along the plane of line 5-5 in Figure 4, showing the mounting bar in the slot;
FIGURE 6 is a partial cross-sectional view of the same rotary cutting cylinder, through the slot, taken along the plane of line 6-6 in Figure 5;
FIGURE 7 is a partial expanded view of the cutting rule, shim, and mounting bar as they would be placed in the slot in the same cylinder;
FIGURE 8 is a partial side elevation view of a second rotary cutting cylinder embodying the invention;
FIGURE 9 is a partial sectional view of the rotary cutting cylinder of Figure 8 through one of the notches in the cylinder;
FIGURE 10 is a partial cross-sectional view of the same rotary cutting cylinder, through the slot, taken along the plane of line 10-10 in Figure 9;
FIGURE 11 is a partial side elevation view of a third rotary cutting cylinder embodying the invention;
FIGURE 12 is a partial cross-sectional view of the same rotary cutting cylinder, through the slot, taken along the plane of line 12-12 in Figure 11;
FIGURE 13 is a partial side elevation view of a fourth rotary cutting cylinder embodying the invention;
FIGURE 14 is a partial sectional view of the rotary cutting cylinder of Figure 13, through one of the notches in the cylinder; and,
FIGURE 15 is a partial cross-sectional view of the same rotary cutting cylinder, through the slot, taken along the plane of line 15-15 in Figure 14.

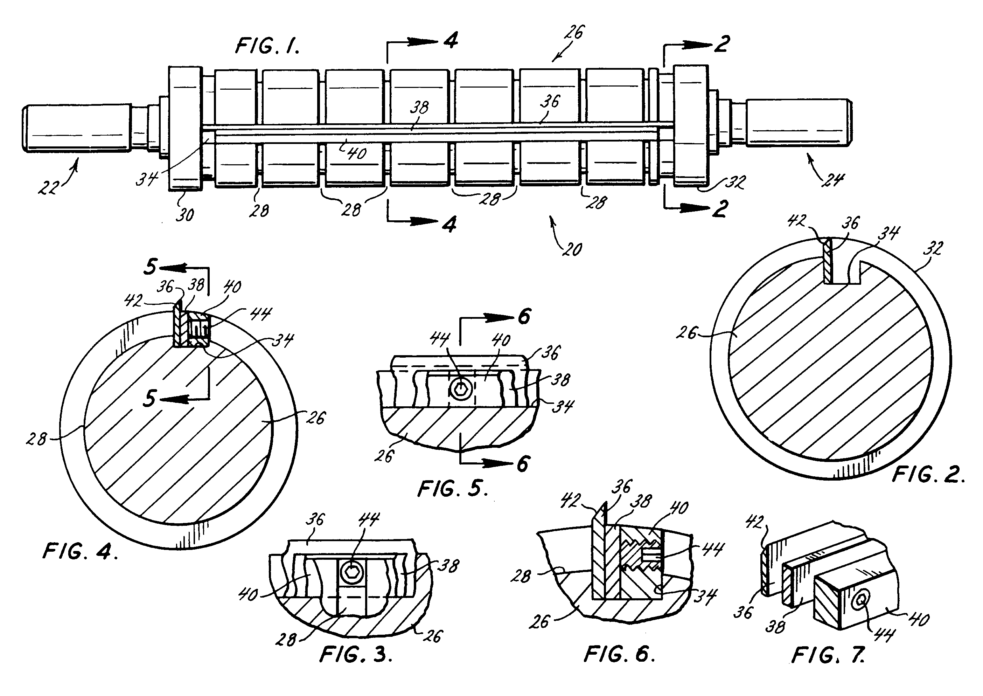

A first embodiment of a rotary cutting cylinder, indicated generally as 20 in Figure 1, is shown in Figures 1-7. Cutting cylinder 20 has left and right ends 22 and 24 for mounting cylinder 20 in a machine. Cutting cylinder 20 has a central section 26 of enlarged diameter. A number of grooves 28 are longitudinally spaced along central section 26 of cutting cylinder 20. These grooves 28 perferably extend completely around the circumference of cutting cylinder 20, so that cutting cylinder 20, including grooves 28, can be conveniently formed on a lathe in one operation. However, as shown in the other embodiments described below, partial grooves, tangential cuts, or notches can be used instead of grooves 28. Drive rolls 30 and 32 can be press fit onto cutting cylinder 20 at opposite ends of central section 26.

A longitudinal slot 34 is formed in cutting cylinder 20, crossing grooves 28. Slot 34 is wide enough to accommodate a cutting rule 36, a shim 38, and a mounting bar 40. Cutting rule 36 has a beveled cutting edge 42 protruding sufficiently from the profile of central section 26 to cut, for example, a web material pressed against it. Shim 38 helps to fill slot 34 and stiffen cutting rule 36 and prevent it from warping. Mounting bar 40 has a generally rectangular cross-section. A number of set screws 44 are spaced along the length of the mounting bar 40. Set screws 44 are preferably threaded sections mounted flush in mounting bar 40 but operable to protrude from mounting bar 40. Each screw 44 has a hexagonal opening 46 for receiving an allen wrench to tighten and loosen screws 44. The grooves 28 are spaced complementary to the screws 44. Mounting bar 40 is preferably made from a commercially available stock, and cut to fit in slot 34.

Cutting rule 36, shim 38, and mounting bar 40 are positioned in slot 34, with set screws 44 in mounting bar 40 aligned with grooves 28 in central section 26. Set screws 44 are tightened, forcing cutting rule 36 and shim 38 forwardly and mounting bar 40 rearwardly in slot 34, against opposite walls of slot 34, to frictionally engage cutting rule 36, shim 38, and mounting bar 40 in slot 34.

Cutting rule 36 can be quickly and easily removed, for example for replacement, by loosening the set screws 44 exposed in the grooves 28.

The rotary cutting cylinder 20 is thus made in a fast, simple, and inexpensive two step operation of forming the grooved cylinder and making a longitudinal slot in the cylinder to receive the cutting rule, or vice versa. The resulting cylinder is of simple construction, reliable, and easy to use.

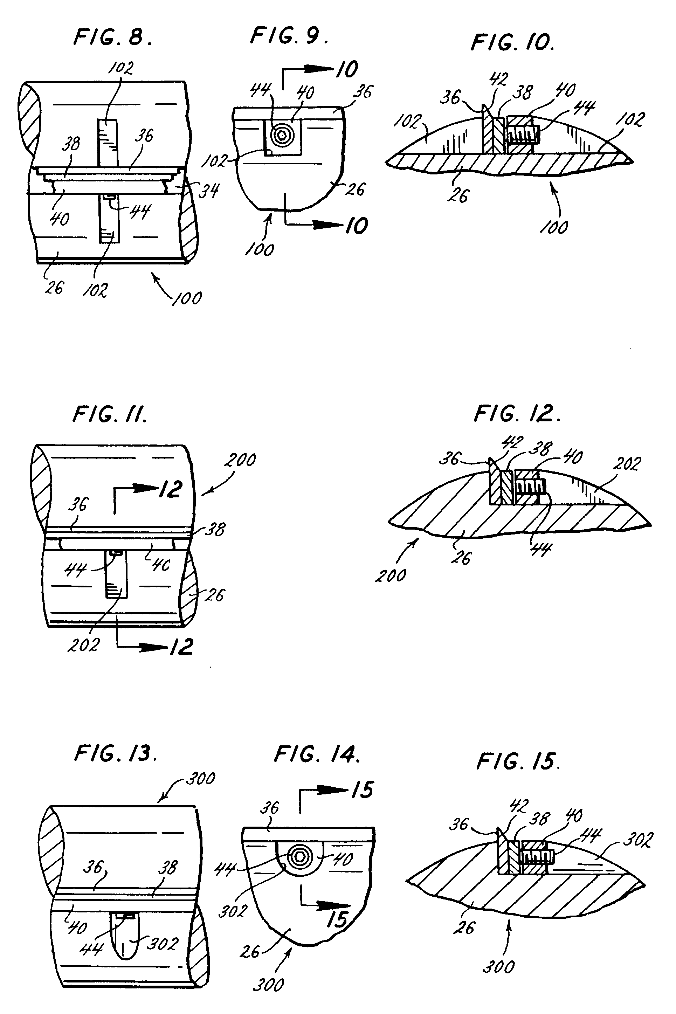

A second embodiment of a rotary cutting cylinder, indicated generally as 100 in Figure 8, is shown in Figures 8-10. Cutting cylinder 100 is identical in construction to cutting cylinder 20, with like parts having the same reference numerals except that instead of a plurality of circumferential grooves 28, cutting cylinder 100 has a plurality of tangential cuts 102. Tangential cuts 102 extend across and communicate with slot 34 in cutting cylinder 100. Tangential cuts 102 can be made before or after slot 34 is made. Tangential cuts 102 are simple to make, and eliminate the difficult and time consuming operations of the prior art of forming a notch having a face at the base of the notch parallel to the slot and forming a threaded hole through this face.

As in the first embodiment described above, cutting rule 36, shim 38, and mounting bar 40 are positioned in slot 34. Like grooves 28, tangential cuts 102 are spaced complementary to screws 44 in mounting bar 40. Set screws 44 in mounting bar 40 are aligned with tangential cuts 102 and are tightened to frictionally engage cutting rule 36, shim 38, and mounting bar 40 in slot 34.

A third embodiment of a rotary cutting cylinder, indicated generally as 200 in Figure 11, is shown in Figures 11 and 12. Cutting cylinder 200 is identical in construction to cutting cylinder 20, with like parts having the same reference numerals, except that instead of a plurality of circumferential grooves 28, cutting cylinder 200 has a plurality of notches 202. Notches 202 open into and communicate with slot 34 in cutting cylinder 200. Notches 202 can be made before or after slot 34 is made. Notches 202 have vertical sidewalls and a flat bottom. Notches 202 are simple to make, and eliminate the difficult and time consuming operations of the prior art of forming a notch having a face at the base of the notch parallel to the slot and forming a threaded hole through this face.

As in the first embodiment described above, cutting rule 36, shim 38, and mounting bar 40 are positioned in slot 34. Like grooves 28 notches 202 are spaced complementary to screws 44 in mounting bar 40. Set screws 44 in mounting bar 40 are aligned with notches 202 and are tightened to frictionally engage cutting rule 36, shim 38, and mounting bar 40 in slot 34.

A fourth embodiment of a rotary cutting cylinder, indicated generally as 300 in Figure 13, is shown in Figures 13-15. Cutting cylinder 300 is identical in construction to cutting cylinder 20, with like parts having the same reference numerals, except that instead of a plurality of circumferential grooves 28, cutting cylinder 200 has a plurality of notches 302. Notches 302 open into and communicate with slot 34 in cutting cylinder 300. Notches 302 can be made before or after slot 34 is made. Notches 302 have curved sidewalls and bottoms. Notches 302 are simple to make, and eliminate the difficult and time consuming operations of the prior art of forming a notch having a face at the base of the notch parallel to the slot and forming a threaded hole through this face.

As in the first embodiment described above, cutting rule 36, shim 38, and mounting bar 40 are positioned in slot 34. Like grooves 28 notches 302 are spaced complementary to screws 44 in mounting bar 40. Set screws 44 in mounting bar 40 are aligned with notches 302 and are tightened to frictionally engage cutting rule 36, shim 38, and mounting bar 40 in slot 34.

There are various changes and modifications which may be made to the invention as would be apparent to those skilled in the art. However, these changes or modifications are included in the teaching of the disclosure, and it is intended that the invention be limited only by the scope of the claims appended hereto.

## Claims

1. A rotary cutting cylinder comprising a generally cylindrical central section (26), the central section (26) having at least one longitudinal slot (34) having opposing sidewalls, a cutting rule (36) in the slot (34), the cutting rule (36) having a cutting edge (42) protruding from the slot (34), a mounting bar (40) in the slot (44) adjacent the cutting rule (36), and means (44) for urging the cutting rule (36) against one sidewall of the slot (34) and for urging the mounting bar (40) away from the cutting rule (36) and against the opposite sidewall of the slot (34) to secure the cutting rule (36) in the slot (34), characterised in that the urging means (44) comprise a plurality of manually operable urging means (44) each located in the mounting bar (40) and longitudinally spaced therealong, and in that the central section (26) includes a plurality of longitudinally spaced grooves (28; 102; 202; 302) each having a portion generally tangential to the central section (26) and aligned with the respective manually operable urging means (44) to provide manual access thereto to enable each such urging means (44) to be manually operated to urge the cutting rule (36) against said one sidewall of the slot (34) and urge the mounting bar (40) away from the cutting rule (36) and against the opposite sidewall of the slot (34).

2. A rotary cutting cylinder as claimed in claim 1, wherein the longitudinally spaced grooves (28) extend around the circumference of the central section (26).

3. A rotary cutting cylinder as claimed in claim 1, wherein the longitudinally spaced grooves (102) comprise tangential cuts in the central section (26) crossing and communicating with the longitudinal slot (34).

4. A rotary cutting cylinder as claimed in claim 1, wherein the longitudinally spaced grooves (202; 302) comprise notches in the central section (26) opening into and communicating with the longitudinal slot (34).

5. A rotary cutting cylinder as claimed in any of the preceding claims, wherein the manually operable means (44) for urging the cutting rule (36) and mounting bar (40), against the opposite walls of the slot (34) comprise a plurality of set screws (44) in the mounting bar (40) each set screw (44) being aligned with a groove (28; 102; 202; 302) in the central section (26), the set screws (44) being operable to urge the cutting rule (36) and the mounting bar (40) against opposite walls of the slot (34) to secure the cutting rule (36) and mounting bar (40) in the slot (34).

6. A rotary cutting cylinder as claimed in claim 5, wherein each set screw (44) has a hexagonal recess (46) for engaging a wrench for operating the set screw (44).

7. A rotary cutting cylinder as claimed in any of the preceding claims, further comprising a shim (38) in the slot (34) between the cutting rule (36) and the mounting bar (40).

## Patentansprüche

1. Drehschneidzylinder mit: einem im wesentlichen zylindrischen Mittelabschnitt (26), der mindestens einen Längsschlitz (34) mit gegenüberliegenden Seitenwänden aufweist; einer Schneidvorrichtung (36) im Schlitz (34), wobei die Schneidvorrichtung (36) eine Schneidkante (42), die aus dem Schlitz (34) hervorsteht, besitzt; einer Befestigungsstange (40) im Schlitz (34) neben der Schneidvorrichtung (36); und Spanneinrichtungen (44) zum Drücken der Schneidvorrichtung (36) gegen eine Seitenwand des Schlitzes (34) und der Befestigungsstange (40) von der Schneidvorrichtung (36) gegen die gegenüberliegende Seitenwand des Schlitzes (34), um die Schneidvorrichtung (36) im Schlitz (34) zu sichern, dadurch gekennzeichnet, daß die Spanneinrichtung (44) mehrere manuell betreibbare Spanneinrichtungen (44) aufweist, die jeweils in der Befestigungsstange (40) mit Längsabstand voneinander in dieser angeordnet sind und wobei der Mittelabschnitt (26) mehrere in Längsrichtung mit Abstand voneinander angeordnete Vertiefungen (28; 102; 202; 302) aufweist, von denen jede einen Abschnitt hat, der im wesentlichen tangential zum Mittelabschnitt (26) ist und mit den entsprechenden manuell betreibbaren Spanneinrichtungen (44) ausgerichtet ist, um manuellen Zugang zu denselben zu ermöglichen und den manuellen Betrieb der Spanneinrichtung (44), um die Schneidvorrichtung (36) gegen eine Seitenwand des Schlitzes (34) zu drücken und die Befestigungsstange (40) von der Schneidvorrichtung (36) weg und gegen die gegenüberliegende Seitenwand des Schlitzes (34) zu drücken.

2. Drehschneidzylinder wie in Anspruch 1 beansprucht, dadurch gekennzeichnet, daß sich die längs mit Abstand voneinander angeordneten Vertiefungen (28) um den Umfang des Zentralabschnitts (26) erstrecken.

3. Drehschneidzylinder nach Anspruch 1, dadurch gekennzeichnet, daß die längs mit Abstand zueinander angeordneten Vertiefungen (102) tangentielle Schnitte im Zentralabschnitt (26) aufweisen, die den Längsschlitz (34) kreuzen und mit diesem verbunden sind.

4. Drehschneidzylinder, wie in Anspruch 1 beansprucht, wobei die längs mit Abstand voneinander angeordneten Vertiefungen (202; 302) Aussparungen im Zentralabschnitt (26) besitzen, die sich zum Längsschlitz (34) öffnen und mit diesem in Verbindung stehen.

5. Drehschneidzylinder wie in irgendeinem der vorangehenden Ansprüche beansprucht, dadurch gekennzeichnet, daß die manuell betreibbare Einrichtung (44) zum Drucken der Schneidvorrichtung (36) und der Befestigungsstange (40) gegen die gegenüberliegenden Wände des Schlitzes (34) mehrere Stell-Schrauben (44) in der Befestigungsstange (40) besitzt, wobei jede Schraube (44) mit einer Vertiefung (28; 102; 202; 302) im Zentralabschnitt (26) ausgerichtet ist, wobei die Stellschrauben (44) so betätigbar sind, daß sie die Schneidvorrichtung (36) und die Befestigungsstange (40) gegen gegenüberliegende Wände des Schlitzes (34) drücken, um die Schneidvorrichtung (36) und die Befestigungsstange (40) im Schlitz (34) zu befestigen.

6. Drehschneidzylinder wie in Anspruch 5 beansprucht, wobei die Einstellschraube (44) eine hexagonale Vertiefung (46) zur Aufnahme eines Schlüssels zur Betätigung der Stellschraube (40) aufweist.

7. Drehschneidzylinder wie in irgendeinem der vorangehenden Ansprüche beansprucht, der ferner ein Paßstück (38) im Schlitz (34) zwischen der Schneidvorrichtung (36) und der Befestigungsstange (40) aufweist.

## Revendications

1. Cylindre de coupe rotatif comprenant une section centrale (26) généralement cylindrique, la section centrale (26) présentant au moins une fente longitudinale (34) dont les parois latérales sont opposées, une règle de coupe (36) dans la fente (34), la règle de coupe (36) ayant une lame (42) faisant saillie de la fente (34), une barre de montage (40) logée dans la fente (34) à côté de la règle de coupe (36) et des moyens (44) pour appuyer la règle de coupe (36) contre une des parois de la fente (34) et maintenir la barre de montage (40) écartée de la règle de coupe (36) et contre la paroi opposée de la fente (34) pour fixer la règle de coupe (36) dans la fente (34), caractérisé en ce que les moyens de serrage (44) se composent de plusieurs moyens de serrage (44) actionnables manuellement, chacun étant logé dans la barre de montage (40) et espacé longitudinalement sur toute sa longueur, et en ce que la section centrale (26) comprend plusieurs rainures (28, 102, 202, 302) espacées longitudinalement, chacune ayant une partie généralement tangente à la section centrale (26) et alignée avec les moyens de serrage (44) actionnables manuellement correspondants pour y accéder manuellement, afin de permettre d'actionner manuellement chacun de ces moyens de serrage (44) pour appuyer la règle de coupe (36) contre l'une des parois latérales de la fente (34) et écarter la barre de montage (40) de la règle de coupe (36) et l'appuyer contre la paroi opposée de la fente (34).

2. Cylindre de coupe rotatif selon la revendication 1, dans lequel les rainures (28) espacées longitudinalement s'étendent sur la circonférence de la section centrale (26).

3. Cylindre de coupe rotatif selon la revendication 1, dans lequel les rainures (102) espacées longitudinalement présentent des encoches tangentielles dans la section centrale (26) traversant et communiquant avec la fente longitudinale (34).

4. Cylindre de coupe rotatif selon la revendication 1, dans lequel les rainures (202, 302) espacées longitudinalement présentent des encoches dans la section centrale (26) ouverts sur la fente longitudinale (34) et communiquant avec cette dernière.

5. Cylindre de coupe rotatif selon l'une des revendications précédentes, dans lequel les moyens (44) actionnables manuellement pour appuyer la règle de coupe (36) et la barre de montage (40) contre les parois opposées de la fente (34) comportent plusieurs vis sans tête (44) dans la barre de montage (40), chaque vis sans tête (44) étant en alignement avec une rainure (28, 102, 202, 302) dans la section centrale (26), les vis sans tête (44) étant actionnables pour appuyer la règle de coupe (36) et la barre de montage (40) contre des parois opposées de la fente (34) pour fixer la règle de coupe (36) et la barre de montage (40) dans la fente (34).

6. Cylindre de coupe rotatif selon la revendication 5, dans lequel chaque vis sans tête (44) présente une encoche hexagonale (46) pour y loger une clé mâle afin d'actionner la vis sans tête (44).

7. Cylindre de coupe rotatif selon l'une des revendications précédentes, comprenant en outre une cale (38) dans la fente (34), entre la règle de coupe (36) et la barre de montage (40).
